# EUROPÄISCHE PATENTANMELDUNG

(11) **EP 4 239 869 A1**
(43) Veröffentlichungstag der Anmeldung: **06.09.2023**
(21) Anmeldenummer: 22160268.3
(22) Anmeldetag: 04.03.2022
(51) Int. Cl.: H02K 15/12, H02K 1/16, H02K 3/12

(54) **VERFAHREN ZUR IMPRÄGNIERUNG EINES STATORS EINER DYNAMOELEKTRISCHEN MASCHINE**

(71) Anmelder: Siemens Aktiengesellschaft, 80333 München (DE)
(72) Erfinder: Katzenberger, Tobias, 97631 Bad Königshofen STT Untereßfeld (DE); Plochmann, Bastian, 91413 Neustadt an der Aisch (DE)
(74) Vertreter: Siemens Patent Attorneys

(57) **Zusammenfassung**

Die Erfindung betrifft ein Verfahren zur Imprägnierung eines in Nuten (4) eines Stators (2) einer dynamoelektrischen Maschine (1) angeordneten Wicklungssystems (6) durch folgende Schritte:
- Benetzen des Wicklungssystems (6) durch Imprägnierharz (33), welches Wicklungssystem (6) in den im Wesentlichen axial verlaufenden Nuten (4) angeordnet ist,
- Einbringen von Vibrationen (34) in den Stator (2) und/oder das Imprägnierharz (33) über einen vorgebbaren Zeitraum mit einstellbarer Amplitude und/oder Frequenz.

## Beschreibung

Die Erfindung betrifft ein Verfahren zur Imprägnierung eines Stators einer dynamoelektrischen Maschine, eine Vorrichtung zur Imprägnierung eines Stators der dynamoelektrischen Maschine, als auch die dynamoelektrische Maschine und deren Verwendung.

Bei dynamoelektrischen Maschinen, wie z.B. Niederspannungsmotoren im Bereich bis 1kV Nennspannung, werden nach dem Einziehen der Wicklung in Nuten eines Stators diese Wicklungen mittels eines Reaktivharzes imprägniert, um eine zusätzliche elektrische und mechanische Isolierung und Passivierung zu erhalten.

Hierbei kommen aus Kosten- und Effizienzgründen oftmals das Tauchverfahren zum Einsatz. Im Bereich der Tauchverfahren gibt es zwei Varianten, welche zum Einsatz kommen. Zum einen das sog. Kalttauchverfahren, wobei ein sehr niederviskoses Harz in einem Becken vorgehalten wird in welches die Statoren, meisten als Batch an einem Stack, getaucht werden, danach abtropfen und im Anschluss durch einen Heißluftofen gehärtet werden. Hierbei werden fast ausschließlich durch Reaktivverdünner verflüssigte Harze verwendet, um die bei Raumtemperatur notwendigen niedrigen Viskositäten zu erhalten.

Dies steht aufgrund gesundheitlicher Belange zunehmend in der Kritik und könnte in naher Zukunft, zumindest im europäischen Raum, als primäre Lösung nicht mehr zur Verfügung stehen.

Als zusätzliches Mittel zur verbesserten Harzaufnahme der getauchten Statoren sind die Kalttauchharze (auf Basis von Styrol) thixotropiert, d.h. scherkraftverdünnend ausgestaltet, sodass ein beim Einfließen des Harzes aufgrund der Scherkräfte sich die Viskosität deutlich verringert und im Anschluss aufgrund der sich wiedereinstellenden höheren Viskosität dort zu einem Teil verbleibt.

Des Weiteren wird alternativ dazu das sogenannte Träufelverfahren verwendet, bei dem das flüssige Harz mittels moderner Misch- und Dosiertechnologie auf den rollierenden, mit dem Wicklungssystem versehenen Stator geträufelt wird. Hierbei fließt das flüssige Harz aufgrund seiner möglichst niedrigen Viskosität, sowie auftretender Kapillarkräfte in die Nuten des Stators ein und verfestigt sich dort, geliert also entweder bei Raumtemperatur (2-Komponentige Systeme mit hoher Reaktivität) oder bei höherer Temperatur, auf die die Statoren gebracht werden müssen.

Hinsichtlich der Imprägnierqualität ist es wünschenswert, dass zum Zeitpunkt des Harzeinfließens (also Eintauchen beim Tauchverfahren und Träufeln mit Kapillarkräften beim Träufelverfahren) das Harz möglichst niederviskos bei der jeweiligen Prozesstemperatur ist und im Anschluss möglichst schnell in einen höherviskosen Zustand übergeht, sodass das Material im Wicklungssystem verbleibt und insbesondere thermisch gehärtet werden kann.

Diese beiden Effekte sind jedoch nicht ohne weiteres entkoppelt voneinander zu betrachten, da eine Viskositätserhöhung über die Zeit entweder durch eine Gelierung, d.h. durch die Vernetzung, erzeugt wird oder aber, sofern keine Scherkräfte mehr auf das Material wirken, durch eine eingestellte Thixotropierung, welche z.B. mittels Thixotropieradditiven wie Aerosil, d.h. pyrogener Kieselsäure, erzeugt wird.

Bei einem kapillareffekt-getriebenen Verfahren, wie dem Träufeln verhält es sich ähnlich, dass das Reaktivharz während der Träufelphase eine möglichst geringe Viskosität aufweisen muss, so dass es möglichst zeiteffizient bis zur Mitte der Nuten fließt. Nach dem vollständigen Einfließen soll die Viskositätserhöhung ebenfalls möglichst schnell erfolgen, um u.a. Taktzeiten dieses Fertigungsschrittes zu reduzieren.

Um möglichst effiziente und qualitativ hochwertige (hohe Harzaufnahme) Imprägnierungen zu erreichen, werden bei unterschiedlichen Verfahren unterschiedliche Maßnahmen angewandt. Beim Strom-UV-Verfahren kommen sehr exakt entwickelte Reaktivharze zum Einsatz deren Gelierbereich durch die resistive Statorerwärmung getroffen werden muss. Dies hat zur Folge, dass zum einen die Harze verhältnismäßig teuer sind und zum anderen der Tauch- und Gelierprozess sehr anspruchsvoll ist, um eine ausreichende Imprägnierqualität (Harzaufnahme) zu erreichen. Zudem kann bei einer zeitlich zu langen Statorerwärmung das Blechpaket des Stators mit erwärmt und unnötig Harz angelieren. Diese sich daraus ergebenden Harzränder am Blechpaket des Stators müssen nachträglich wieder, meist von Hand, aufwändig entfernt werden.

Beim Kalttauchverfahren wird oftmals eine schlechtere Harzaufnahme in Kauf genommen, da typischerweise keine Viskositätsveränderung des Harzes zwischen dem Eintauchen und dem Austauchen auftritt. Durch Abdampfen von Reaktivverdünnern (Styrol) während der Abtropfphase wird das verbleibende Harz in geringem Umfang hochviskoser, wodurch es in den Wicklungen verbleibt. Neuartige Harze sind leicht thixotropiert, was eine geringe Verbesserung der Harzaufnahme im Vergleich zu herkömmlichen Harzen bewirkt.

Beim Träufelverfahren werden die Harze hinsichtlich der Viskosität und der Gelierpunkte optimiert, wobei beide Parameter teilweise sehr unterschiedliche Tendenzen aufweisen, was eine Harzoptimierung auf beide Parameter ab einem gewissen Punkt technisch nicht umsetzbar macht. Gerade bei langen Achslängen müssen Harze eine sehr niedrige Viskosität für einen Zeitraum von mehreren 10 Minuten aufweisen, was dazu führt, dass im Nachgang die Gelierphase zeit- und oder energieintensiver ausfällt.

Ausgehend davon liegt der Erfindung die Aufgabe zugrunde ein Verfahren zur Imprägnierung eines Stators einer dynamoelektrischen Maschine bereitzustellen, welches Verfahren vor allem die Qualität des Imprägnierprozesses in einfacher Art und Weise verbessert. Des Weiteren soll eine Vorrichtung zur Durchführung des Verfahrens zur Imprägnierung des Stators bereitgestellt werden, die den Fertigungsprozess vereinfacht. Dabei soll eine dynamoelektrische Maschine bereitgestellt werden, die einen vergleichsweise hohen Wirkungsgrad aufweist.

Die Lösung der gestellten Aufgabe gelingt durch ein Verfahren zur Imprägnierung eines in Nuten eines Stators einer dynamoelektrischen Maschine angeordneten Wicklungssystems durch folgende Schritte:
- Benetzen des Wicklungssystems durch Imprägnierharz, welches Wicklungssystem in den im Wesentlichen axial verlaufenden Nuten angeordnet ist,
- Einbringen von Vibrationen in den Stator und/oder das Harz über einen vorgebbaren Zeitraum mit einstellbarer Amplitude und/oder Frequenz.

Die Lösung der gestellten Aufgabe gelingt auch durch eine Vorrichtung zur Durchführung eines Verfahrens zur Imprägnierung eines in Nuten eines Stators einer dynamoelektrischen Maschine angeordneten Wicklungssystems,
wobei zur Durchführung, insbesondere der Imprägnierung zumindest ein Stator einem Haltemittel zuordenbar ist, insbesondere an einer Traverse befestigbar ist,
wobei in einer Imprägnierstation, insbesondere einer Träufelstation oder einer Tauchstation, in der das Wicklungssystem des Stators mit insbesondere einem thixotropierten Harz versetzt wird, der Stator und/oder das Harz über eine oder mehrere Sonotroden zu Vibrationen über einen vorgebbaren Zeitraum mit einstellbarer Amplitude und/oder Frequenz anregbar sind.

Die Lösung der gestellten Aufgabe gelingt auch durch eine dynamoelektrische Maschine mit einem Stator hergestellt nach einem Verfahren nach Anspruch 1, wobei das Wicklungssystem eine vergleichsweise höhere Harzaufnahme, bei sonst gleichem zeitlichen und prozesstechnischen Aufwand, aufweist. Mit anderen Worten, es gibt weniger nicht mit Harz gefüllte Einschlüsse.

Kern der Erfindung ist ein Verfahren zur Imprägnierung eines Stators einer dynamoelektrischen Maschine, wobei die Nutzung von mechanischen Schwingungen angezogen werden, um die oben genannten Fließprozesse eines Imprägnierharzes in einem Wicklungssystem zu verbessern. Durch die Anregung des Imprägnierharzes zu fließen, mittels z.B. einer Schallsonotrode können sowohl das Harzbecken und somit die darin befindliche Flüssigkeit und/oder Statoren der dynamoelektrischen Maschine und/oder das Harz selbst in Schwingung versetzt werden.

Anstatt Schall- bzw. Ultraschall zur Schwingungsanregung zu nutzen, können auch mechanische Schwingungen bzw. Vibrationen in dem Verfahren benutzt werden. Hier wäre ggf. auf die Frequenz eines anschlagendenden Hammers und die jeweilige spezifische Eigenfrequenz z.B. des Harzbeckens abzustimmen.

Schallsonotroden sind Werkzeuge, die durch das Einleiten von hochfrequenten mechanischen Schwingungen z.B. Ultraschall in Resonanzschwingungen versetzt werden. Sie stellen somit die Verbindung von einem Ultraschallgenerator zu einem Werkstück her und passen die Ultraschallschwingung an die Bearbeitungsaufgabe an. Die Geometrie der Sonotroden ist dabei abhängig von der durch den eingesetzten Schallgenerator bereitgestellten Frequenz und von der anstehenden Bearbeitungsaufgabe, d.h. z.B., ob der Stator selbst in Schwingung versetzt wird und/oder das Harz.

In einer Ausführung werden die Vibrationen über die Aufhängungen der Imprägnierhaken bei einer Tauchimprägnierung eingebracht. Dabei befinden sich im weitesten Sinne alle Aufhängungen an einer Vibrationsplatte bzw. Traverse, an der sie befestigt sind, z.B. gelagert bzw. fixiert sind. Die Befestigung ist so ausgestaltet, dass sich die Schwingungen bzw. Vibrationen von der Traverse in den Stator oder die Statoren übertragen lassen.

Alternativ kann dazu auch das Imprägnierharz die Vibrationen über das vibrierende Harzbecken aufnehmen oder eine (Ultra)-Schallsonotrode befindet sich eingetaucht direkt oder gekapselt im Harzbecken.

Ähnlich verhält es sich beim Träufeln. Hier können über ein Spannfutter, das jeweils die Statoren aufnimmt, die Vibrationen in den Stator und damit das Imprägnierharz eingebracht werden.

Alternativ können beim Träufeln diese Vibrationen auch über Rollen, auf denen der Stator rolliert und welche z.B. über eine Sonotrode angeregt werden, in das System, d.h. das mit dem Imprägnierharz zu versehenden Wicklungssystem des Stators eingebracht werden.

Durch das Einbringen dieser Schwingungen in den Prozess des Träufel- oder Tauchimprägnierens wird im Falle eines thixotropierten Imprägnierharzes die Viskosität um die Dauer der Schalleinwirkung zuzüglich einer spezifischen Latenzzeit reduziert, was dazu genutzt werden kann, ein Einfließen des Harzes in den Wicklungsraum der Nuten und/oder Wicklungskopf des Stators zu begünstigen.

Das Thixotropieradditiv setzt die Ruheviskosität nach oben. Die dynamische Viskosität entspricht dann im besten Fall der sonst homogenen Viskosität des nicht thixotropierten Materials. Es wird also ein dünnflüssiges Material verwendet, dieses thixotropiert und damit die Gelierzeit künstlich verkürzt.

Es kann also per se ein durch das Thixotropieradditiv (z.B. pyrogene Kieselsäure) höherviskoses Imprägnierharz verwendet werden, was im Zyklus des Einfließens durch die Schwingungen verflüssigt wird. Durch Beendigung der mechanischen Schwingungen nach der Einfließphase kommt es zum Viskositätsanstieg, wodurch das Harz beim Austauchen (Kalttauchen oder Heißtauchen) oder nach der Träufelphase in der Gelierphase (Träufelverfahren) im höheren Maße in der Wicklung verbleibt als bei herkömmlichen, nicht thixotropierten, Imprägnierharzen mit gleicher Verarbeitungsviskosität.

Bei den beanspruchten Verfahren, die das Träufel- oder Tauchimprägnieren beinhalten, weist das Imprägnierharz u.a. thixotropisches Verhalten auf, wobei dessen Viskosität infolge eines äußeren Einflusses (z.B. Vibrationen) abnimmt und nach beendigter Beanspruchung wieder zumindest in die Ausgangsviskosität zurückkehrt.

Durch Vibrationen des Imprägnierharzes und/oder durch Vibrationen des mit Imprägnierharzes zu versehenem Stator, nimmt mit der Zeit die Viskosität des Imprägnierharzes ab. Nach Beendigung der Vibrationen steigt die Viskosität des Imprägnierharzes zeitabhängig wieder an, und geliert somit vergleichsweise schnell, um die weitere Verarbeitung des Stators einzuleiten bzw. zu ermöglichen.

Eine Thixotropierung des Imprägnierharzes wird u.a. durch Zugabe und Dispergieren von pyrogener Kieselsäure im Bereich zwischen 0,1-0,5 vol.-% erreicht.

Im Bereich der Träufelimprägnierung sind die rollierenden Statoren liegend ausgerichtet, d.h. die beabsichtigte Flussrichtung des Harzes ist horizontal. Ein unerwünschtes Abtropfen des Harzes wird durch das Rollieren verhindert. Gerade bei vergleichsweise langen Blechpaketen des Stators (Nutlängen 20 cm und mehr) ist ein thixotropiertes Imprägnierharz, welches durch Vibrationen des rollierenden Stators verflüssigt wird sinnvoll, da aufgrund der geringen Fließgeschwindigkeiten Fließzeiten von mehreren 10 Minuten erreicht werden müssen und im Anschluss trotzdem ein möglichst rascher Viskositätsanstieg des Imprägnierharzes wünschenswert ist.

Dies kann mit herkömmlichen Verfahren allein über das Gelierverhalten der Harze nicht ohne zusätzliche thermische Beaufschlagung bewerkstelligt werden.

Zusätzlich zur Verflüssigung thixotropierter Imprägnierharze kommt es in den Zwischenräumen der Kupferwicklungen, innerhalb der Nuten des Stators zu peristaltischen Effekten, welche insbesondere bei im Wesentlichen horizontal liegenden Nuten, wie es z.B. beim Träufelverfahren der Fall ist, die Fließgeschwindigkeit erhöhen. Dieser "Peristaltikpumpen"-Effekt verringert also bei gleicher Viskosität des Imprägnierharzes die Einfließzeit in die Nut, bzw. kann höherviskose und/oder thixotropierte Harze diesbezüglich verbessern, sodass eine zügigere Viskositätserhöhung in der Gelierphase genutzt werden kann.

Dabei liegen mehrere Drähte des Wicklungssystems parallel, wobei jeder für sich schwingt. Dabei kommt es lokal zwischen den Drähten immer wieder zu Volumenverkleinerung und Volumenvergrößerungen (in Form einer mehr oder weniger stehenden oder fließenden Welle), die diesen Pumpeneffekt bewirken. Dieses lässt das Medium z.B. das Imprägnierharz hin und her fließen, was zumindest über die Scherkraft den Thixotropieeffekt und ein Zerfließen auslöst. Dieser Effekt wird ggf. durch thermodynamische Effekte unterstützt.

Den "Peristaltikpumpen"-Effekt kann man sich auch als eine Art Wanderwelleneffekt einer sich fortbewegenden Welle an den Drähten vorstellen.

Die oben genannten Eigenschaften, insbesondere des Imprägnierharzes sind während des Imprägnierprozess vorteilhaft, da vergleichsweise niedrigere Verarbeitungstemperaturen, günstigere Imprägnierharze, Verzicht auf einen Reaktivverdünner in den Imprägnierharzen und kürzere Zykluszeiten bei der Imprägnierung der Statoren und damit der Herstellung der dynamoelektrischen Maschinen u.a. einen Kostenvorteil bei der Herstellung einer dynamoelektrischen Maschine schaffen.

Die Fließgeschwindigkeit des Imprägnierharzes konnte bislang beim Träufeln nur über eine anlagentechnische Schrägstellung des zu beträufelnden Stators oder durch eine weitere Reduktion der Viskosität bewerkstelligt werden. Eine Schrägstellung bedeutet einen höheren Anlageninvest, da u.a. eine dementsprechende anzusteuernde und gelagerte Achse in einer Vorrichtung vorgesehen werden muss.

Eine Reduktion der Viskosität bei bisherigen Imprägnierharzen und ein Einsatz bei den bisherigen Verfahren zur Imprägnierung, ist u.a. chemisch sehr aufwändig. Dabei würde sich auch das Gelier- und Härtungsverhaltens des Harzes verschlechtern. Eine derartige chemische Veränderung eines Imprägnierharzes könnte nicht, wie die bisherigen Imprägnierharzes gehandhabt werden, wären nicht VOC-arm (VOlatile Content) und könnten wahrscheinlich die erforderlichen Wärmeklassen im Elektromaschinenbau nicht mehr einhalten.

Ein Vorteil der Viskositätsveränderung des Imprägnierharzes sowie der "Pumpeneffekt" durch Vibration ist demnach, dass die rheologischen Eigenschaften des Imprägnierharzes im Verfahren sehr zeitgenau gesteuert werden können, sodass, wie oben beschrieben, ein Einfließen des Imprägnierharzes in das in der Nut positionierte Wicklungssystem zielgenau steuerbar ist. Dennoch ist im Anschluss an den Imprägnierprozess eine sehr zügige Viskositätserhöhung und Gelierung Imprägnierharzes vorhanden. Dies ist durch alleinige Einstellung der Harzchemie nicht möglich.

An den optimierten Verfahrensprozess kann eine Vorrichtung oder Fertigungslinie in einfacher Art und Weise angepasst werden, indem das Imprägnierharz vorzugsweise thixotropiert ausgeführt wird und/oder Vibrationen während des Imprägnierprozesses in das Imprägnierharz und/oder den Stator eingeleitet werden.

Ein dementsprechend hergestellter Stator weist innerhalb seines Wicklungssystem eine homogene und nahezu einschlussfreie Verteilung des Imprägnierharzes und somit eine möglichst hohe Harzaufnahme auf, was den Wirkungsgrad einer mit einem derartigen Stator versehenen dynamoelektrischen Maschine steigert.

Die Verwendung einer derartigen dynamoelektrischen Maschine, erfolgt vor allem in maritimen, industriellen oder nahrungstechnischen Bereichen, als Antrieb von Kompressoren, Verdichtern, Lüftern, Mischer oder Hilfsantrieben, wo es aufgrund der langen Laufzeiten besonders auf den Wirkungsgrad der dynamoelektrischen Maschine ankommt.

Die Erfindung sowie weitere vorteilhafte Ausgestaltungen der Erfindung werden anhand prinzipiell dargestellter Ausführungsbeispiele näher erläutert, darin zeigen:
- FIG 1: eine dynamoelektrische Maschine,
- FIG 2: ein Teilquerschnitt eines Stators einer dynamoelektrischen Maschine,
- FIG 3: Abschnitte einer prinzipiell dargestellte Fertigungslinie für Statoren dynamoelektrischer Maschinen,
- FIG 4: ein Becken mit Imprägnierharz und darin eingelassene Sonotroden,
- FIG 5: ein Becken mit Imprägnierharz und daran angeordnete Sonotroden,
- FIG 6: ein Becken mit Imprägnierharz und an einer Traverse angeordnete Sonotroden,
- FIG 7: ein Becken mit Imprägnierharz und mit an Aufhängungen angeordneten Sonotroden,
- FIG 8: ein Becken mit Imprägnierharz und darin eingelassene Statoren mit an den Statoren angeordneten Sonotroden,
- FIG 9: Diagramm mit einem zeitlichen Verlauf der Viskosität.

Es sei angemerkt, dass sich Begriffe wie "axial", "radial", "tangential" etc. auf die in der jeweiligen Figur bzw. im jeweils beschriebenen Beispiel zum Einsatz kommende Achse 11 beziehen. Mit anderen Worten beziehen sich die Richtungen axial, radial, tangential stets auf eine Achse 11 des Rotors 9 und damit auf die entsprechende Symmetrieachse des Stators 2. Dabei beschreibt "axial" eine Richtung parallel zur Achse 11, "radial" beschreibt eine Richtung orthogonal zur Achse 11, auf diese zu oder auch von ihr weg, und "tangential" ist eine Richtung, die in konstantem radialem Abstand zur Achse 11 und bei konstanter Axialposition kreisförmig um die Achse 11 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 9 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

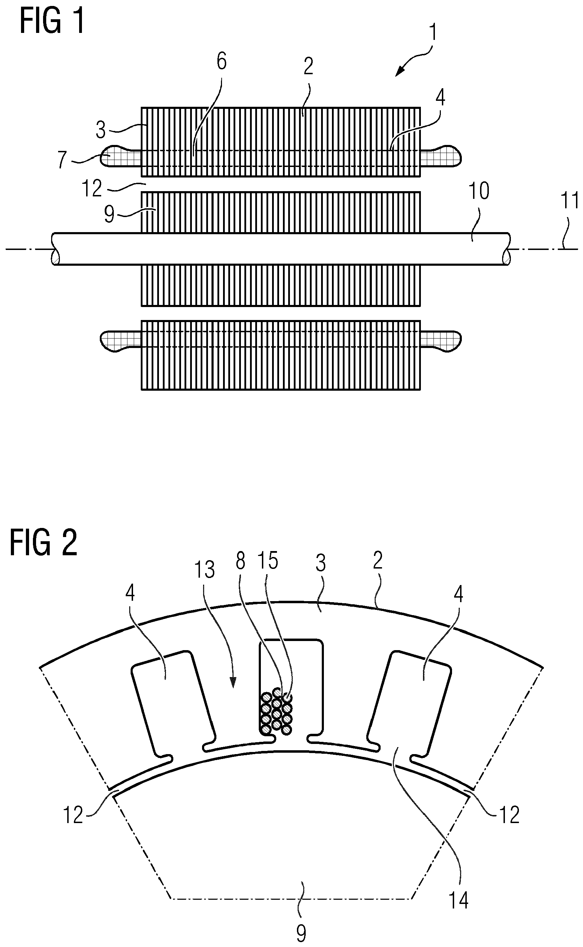

FIG 1 zeigt eine dynamoelektrische Maschine 1 mit einem Stator 2, wobei der Stator 2 einen elektromagnetisch leitfähigen Körper, insbesondere ein Blechpaket 3 aufweist, das in Nuten 4, die zu einem Luftspalt 12 der dynamoelektrische Maschine 1 gewandt sind ein Wicklungssystem 6 aufweist. Bei diesem Wicklungssystem 6 verlaufen die Wicklungsdrähte 15 axial innerhalb den Nuten 4 und bilden an den Stirnseiten des Blechpaketes 3 Wickelköpfe 7 aus. Zwischen den Wicklungsdrähten 15 einer Nut 4 sind Zwischenräume 8 vorhanden, die durch einen Imprägnierungsvorgang ausgefüllt werden, sodass das Wicklungssystem 6 u.a. positionsgenau angeordnet bleibt.

Von dem Stator 2 durch den Luftspalt 12 beabstandet, ist ein Rotor 9 drehfest mit einer Welle 10 verbunden und drehbar um eine Achse 11 angeordnet. Der Rotor 9 kann als Kurzschlussläufer oder als permanenterregter Rotor ausgeführt sein.

Innerhalb der Nut 4 zwischen den Wicklungsdrähten 15 und im Wickelkopf 7 ist ein Imprägnierharz 33 vorzusehen, das über einen Nutschlitz 14 und/oder den axialen Nutquerschnitt bzw. über den Wickelkopf 7 zugeführt wird und die Zwischenräume 8 ausfüllt.

FIG 2 zeigt in einem Teilquerschnitt den Stator 2 mit beispielhaft drei dargestellten Nuten 4. Zwischen den Nuten 4 ist jeweils ein Zahn 13 des Blechpakets 3 vorzusehen. Die Nuten 4 verengen sich Richtung Luftspalt 12 zu einem Nutschlitz 14, wobei der Nutquerschnitt durch die beispielhaft dargestellten Wicklungsdrähte 15 eingenommen wird. In die Zwischenräume 8 zwischen den Wicklungsdrähten 15 ist das Imprägnierharz 33 einzubringen.

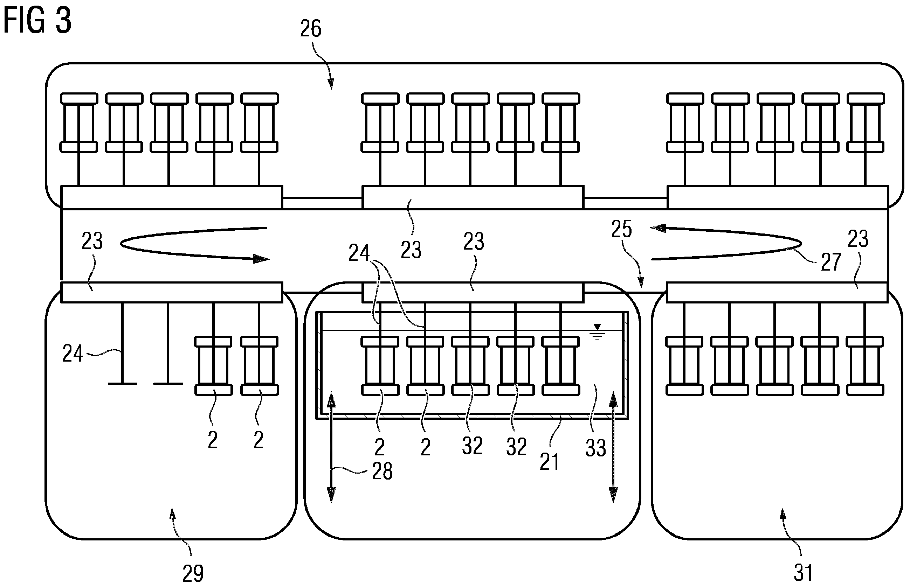

FIG 3 zeigt eine prinzipiell dargestellte Fertigungslinie 27 zur Imprägnierung von Statoren 2. Dabei stellt sich der prinzipielle Ablauf wie folgt dar: In einem Abschnitt Bestückung 29 erfolgt ein Positionieren von Statoren 2 an einer Aufhängung 24, die wiederum an einer Traverse 23 angeordnet sind. Die Aufhängung 24 kann dabei starr mit der Traverse 23 verbunden sein oder über Haken 32 dort angeordnet werden.

In einer nächsten Station erfolgt ein Tauchvorgang 30, dabei werden die an der Aufhängung 24 positionierten Statoren 2 in ein Becken 21 mit Imprägnierharz 33 mit einem vorgebbaren Hub 28 eingelassen, sodass eine Bedeckung des gesamten Stators 2 erfolgt. Durch Vibrationen 34 wird nunmehr das Imprägnierharz 33 veranlasst die Zwischenräume 8 zwischen den Wicklungsdrähten 15 einer Nut 4 einzunehmen. Dieser Vorgang wird in den folgenden Figuren näher beschrieben.

Die daran anschließenden Schritte sind eine Abtropfung 31 der mit versehenen Statoren 2 und eine Aufheizung 26 dieser Statoren 2 beispielsweise in einem Ofen 26.

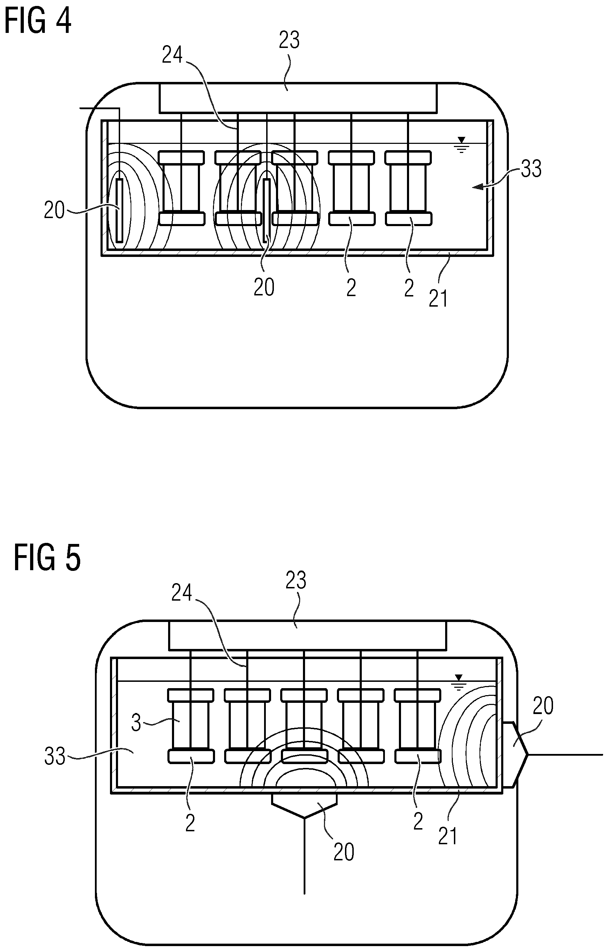

FIG 4 zeigt die Imprägnierung der an der Traverse 23 angeordneten Statoren 2 durch einen Tauchvorgang 30, bei dem die Statoren 2 in das Imprägnierharz 33 eingetaucht werden. Um nunmehr den Vorgang der Imprägnierung zu beschleunigen, und sämtliche Zwischenräume 8 im Wicklungssystem 6 mit Imprägnierharz 33 zu beaufschlagen, wird nunmehr über Sonotroden 20 das Imprägnierharz 33 in Schwingungen versetzt. Dabei sind Frequenzen zwischen 20 und 30 kHz besonders geeignet. Auch die Anordnung der Sonotroden und damit die Schwingungsrichtung im Imprägnierharz 33 verbessert die Befüllung der Zwischenräume 8, je nachdem wie die Schwingungsrichtung der Vibrationen 34 ist. Besonders vorteilhaft ist, wenn die Sonotroden 20 derart angeordnet sind, dass sich peristaltische Pumpeneffekte des Imprägnierharzes 33 in die Zwischenräume 8 einstellen.

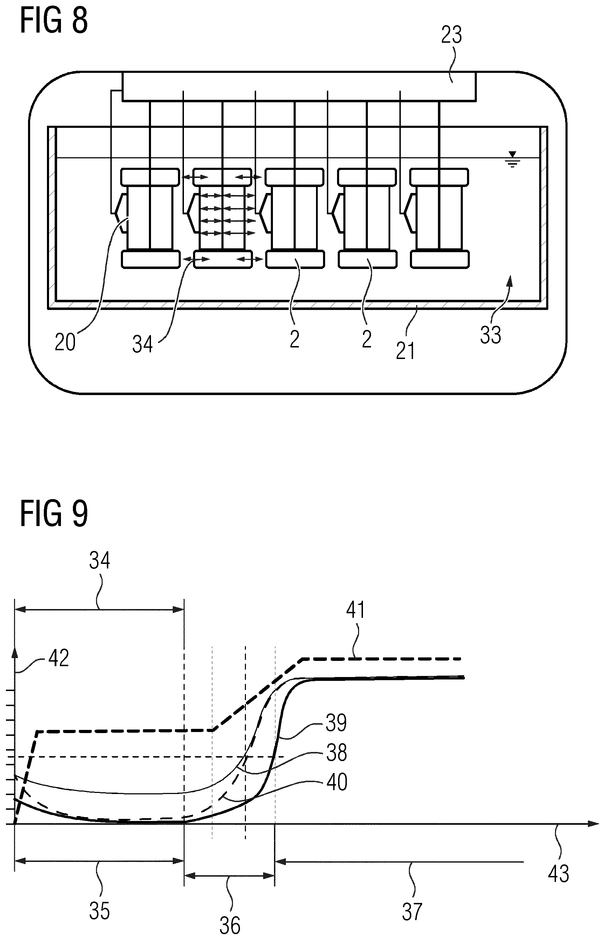

Besonders vorteilhaft wirken diese Vibrationen 34 bei thixotropiertem Imprägnierharz 33, wie dies in den Erläuterungen zu FIG 9 näher beschrieben und dargelegt wird.

In FIG 5 sind diese Sonotroden 20 am Beckenrand 22 angeordnet, was die Reinigung der Sonotroden 20 wesentlich vereinfacht. Auch über die Anordnung am Beckenrand 22 kann die Schwingungsrichtung beeinflusst werden. Ansonsten entspricht der Aufbau der Ausführung gemäß FIG 4.

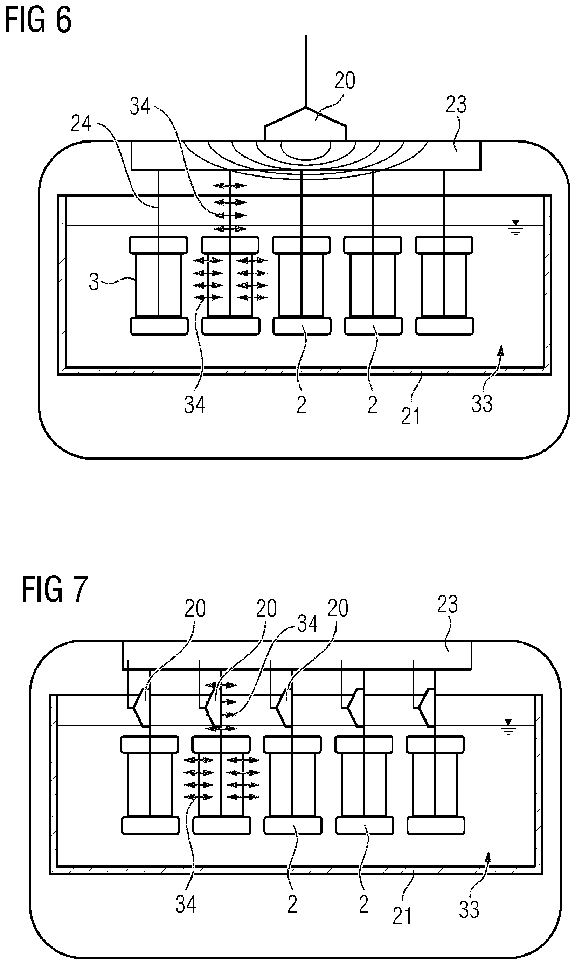

FIG 6 zeigt eine weitere Ausführung des Tauchvorganges 30, wobei eine Sonotrode 20 ihre Schwingungen in die Traverse 23 überträgt und diese in die Aufhängungen 24 gelangen und dort zu Schwingungen und Vibrationen 34 am Stator 2 führen. Damit wird ebenfalls erreicht, dass das Imprägnierharz 33 in die Zwischenräume 8 gelangt.

Auch das Anbringen von Sonotroden 20 direkt an der Aufhängung 24 gemäß FIG 7 oder direkt am Blechpaket 3 innerhalb des Tauchbades 30 gemäß FIG 8 führt zu Schwingungen des Stators 2 und letztlich dazu, dass das Imprägnierharz 33 in die Zwischenräume 8 gelangt.

FIG 9 zeigt in einem Diagramm einen möglichen zeitlichen Ablauf 43 mit dem Vorgang des Imprägnierens, Gelierens und des Aufheizens unter der Berücksichtigung der in den einzelnen zeitlichen Abschnitten (35-37) vorhandenen Viskosität 42 unterschiedlicher Harze 38-39. Dabei stellt des zeitliche Abschnitt 35 die zeitliche Einwirkung der Schwingungen bzw. Vibrationen 34 dar. Der zeitliche Abschnitt 36 stellt die Gelierphase dar. Der zeitliche Abschnitt 37 stellt die Nachbehandlung z.B., in einem Ofen 26 dar

Ein Harz 38 weist eine hohe Viskosität auf, so dass ein Eindringen in die Zwischenräume 8 vergleichsweise schwierig ist. Harz 39 weist eine vergleichsweise geringe Viskosität auf, was das Eindringen in die Zwischenräume 8 erleichtert, jedoch die Gelierphase verlängert. Besonders günstig ist das thixotropierte Harz 40, das unter Einwirken von Vibrationen 34 seine Viskosität maßgeblich verringert, jedoch nach Beendigung der Vibrationen 34 vergleichsweise schnell - schneller als die Harze 38, 39 - wieder eine hohe Viskosität erhält.

Durch das Einbringen dieser Schwingungen in den Prozess des Träufel- oder Tauchimprägnierens wird im Falle eines thixotropierten Imprägnierharzes 33 die Viskosität 42 um die Dauer der Schalleinwirkung bzw. Schwingungen, zuzüglich einer spezifischen Latenzzeit reduziert, was dazu genutzt werden kann, ein Einfließen des Imprägnierharz 33 in den Wicklungsraum der Nuten 4 und/oder Wicklungskopf 7 des Stators 2, insbesondere die Zwischenräume 8 zu begünstigen.

Es kann also per se ein durch ein Thixotropieradditiv (z.B. pyrogene Kieselsäure) höherviskoses Imprägnierharz 40 verwendet werden, was im Zyklus des Einfließens durch die Schwingungen verflüssigt wird. Durch Beendigung der mechanischen Schwingungen nach der Einfließphase kommt es zum Viskositätsanstieg, wodurch das Harz 40 beim Austauchen (Kalttauchen/ Heißtauchen) oder nach der Träufelphase in der Gelierphase (Träufelverfahren) im höheren Maße in der Wicklung verbleibt als bei herkömmlichen, nicht thixotropierten, Harzen mit gleicher Verarbeitungsviskosität.

Das Verfahren zur Imprägnierung von Statoren 2 ist besonders vorteilhaft, wenn das Imprägnierharz 33 u.a. thixotropisches Verhalten aufweist, wobei die Viskosität 42 infolge eines äußeren Einflusses (z.B. Vibrationen 34) abnimmt und nach beendigter Beanspruchung wieder zumindest in die Ausgangsviskosität zurückkehrt.

Durch Vibrationen 34 des Imprägnierharz 33 über das Imprägnierharz 33 selbst oder durch Vibrationen 34 des Stators 2 nimmt somit mit der Zeit die Viskosität 42 ab - nach Beendigung der Vibrationen 34 steigt die Viskosität 42 des Imprägnierharzes 33 zeitabhängig wieder an.

Die Verwendung von derartig imprägnierten Statoren 2 findet vor allem bei dynamoelektrischen Maschine 1 statt, die vor allem in maritimen, industriellen oder nahrungstechnischen Bereichen, als Antrieb von Kompressoren, Verdichtern, Lüftern, Mischer Hebezeugen oder Hilfsantrieben eingesetzt werden, wo es u.a. aufgrund der langen Laufzeiten dieser dynamoelektrischen Maschinen 1 besonders auf den Wirkungsgrad und die Zuverlässigkeit dieser dynamoelektrischen Maschinen 1 ankommt.

## Patentansprüche

1. Verfahren zur Imprägnierung eines in Nuten (4) eines Stators (2) einer dynamoelektrischen Maschine (1) angeordneten Wicklungssystems (6) durch folgende Schritte:
- Benetzen des Wicklungssystems (6) durch Imprägnierharz (33), welches Wicklungssystem (6) in den im Wesentlichen axial verlaufenden Nuten (4) angeordnet ist,
- Einbringen von Vibrationen (34) in den Stator (2) und/oder das Imprägnierharz (33) über einen vorgebbaren Zeitraum mit einstellbarer Amplitude und/oder Frequenz.

2. Verfahrens zur Imprägnierung eines in Nuten (4) eines Stators (2) einer dynamoelektrischen Maschine (1) angeordneten Wicklungssystems (6) nach Anspruch 1, **dadurch ge- kennzeichnet**, dass das Wicklungssystem (6) über einen Tauch- oder Träufelvorgang mit Imprägnierharz (33) benetzt wird.

3. Verfahrens zur Imprägnierung eines in Nuten (4) eines Stators (2) einer dynamoelektrischen Maschine (1) angeordneten Wicklungssystems (6) nach Anspruch 1 oder 2, **dadurch gekennzeichnet, dass** die Vibrationen (34) über zumindest einen Sonotroden (20) eingebracht werden.

4. Verfahrens zur Imprägnierung eines in Nuten (4) eines Stators (2) einer dynamoelektrischen Maschine (1) angeordneten Wicklungssystems (6) nach einem der vorhergehenden Ansprüche, **dadurch gekennzeichnet, dass** die Einwirkzeit der Sonotroden (20) auf das Imprägnierharz (33) in Abhängigkeit von der Harzsorte und/oder der axialen Länge der Nuten (4) des Stators (2) eingestellt wird.

5. Vorrichtung zur Durchführung eines Verfahrens zur Imprägnierung eines in Nuten (4) eines Stators (2) einer dynamoelektrischen Maschine (1) angeordneten Wicklungssystems (6), wobei zur Durchführung, insbesondere der Imprägnierung zumindest ein Stator (2) ein Haltemittel zuordenbar ist, insbesondere an einer Traverse (23) befestigbar ist, wobei in einer Imprägnierstation, insbesondere einer Träufelstation oder einer Tauchstation, in der das Wicklungssystem (6) des Stators (2) mit insbesondere einem thixotropierten Imprägnierharz (33) versetzt wird, der Stator (2) und/oder das Imprägnierharz (33) über eine oder mehrere Sonotroden (20) zu Vibrationen (34) über einen vorgebbaren Zeitraum mit einstellbarer Amplitude und/oder Frequenz anregbar sind.

6. Vorrichtung zur Durchführung eines Verfahrens zur Imprägnierung eines in Nuten (4) eines Stators (2) einer dynamoelektrischen Maschine (1) angeordneten Wicklungssystems (6), nach Anspruch 5, wobei die Sonotroden (20) den Stator (2) über die Traverse (23) und/oder die Aufhängung (24) und/oder über das Blechpaket (3) zu Vibrationen (34) anregen.

7. Vorrichtung zur Durchführung eines Verfahrens zur Imprägnierung eines in Nuten (4) eines Stators (2) einer dynamoelektrischen Maschine (1) angeordneten Wicklungssystems (6), nach Anspruch 5 und 6, wobei die Sonotroden (20) über in das Harzbecken (21) eingelassene Sonotroden (20) und/oder über am Beckenrand (22) angeordnete Sonotroden (20) das Harz zu Vibrationen (34) anregen.

8. Vorrichtung zur Durchführung eines Verfahrens zur Imprägnierung eines in Nuten (4) eines Stators (2) einer dynamoelektrischen Maschine (1) angeordneten Wicklungssystems (6), nach Anspruch 5 bis 7, **dadurch gekennzeich-net,** dass die Sonotroden (20) derart ausgerichtet sind, dass sich innerhalb der in den Nuten (4) befindlichen Wicklungsdrähte (15) ein peristaltischer Pumpeneffekt und/oder ein thermodynamischer Verteilungseffekt des Imprägnierharzes (33) einstellt.

9. Dynamoelektrische Maschine (1) mit einem Stator (2) hergestellt nach einem Verfahren nach Anspruch 1 bis 4, wobei das Wicklungssystem (6) lunkerfrei ist.

10. Verwendung einer dynamoelektrischen Maschine (1) nach Anspruch 9, in maritimen, industriellen oder nahrungstechnischen Bereichen, als Antrieb von Kompressoren, Verdichtern, Lüftern, Mischer oder Hilfsantrieben.
